# EUROPÄISCHE PATENTSCHRIFT

(11) **EP 3 980 279 B1**
(45) Veröffentlichungstag und Bekanntmachung des Hinweises auf die Patenterteilung: **09.08.2023**
(21) Anmeldenummer: 20723825.4
(22) Anmeldetag: 30.04.2020
(51) Int. Cl.: B60C 11/03, B60C 11/00, B60C 11/12, B60C 11/14, B60C 11/18

(54) **FAHRZEUGLUFTREIFEN**
PNEUMATIC TYRE FOR A VEHICLE
PNEUMATIQUE DE VÉHICULE

(30) Priorität: 07.06.2019 DE 102019208322
(43) Veröffentlichungstag der Anmeldung: 13.04.2022
(73) Patentinhaber: Continental Reifen Deutschland GmbH, 30165 Hannover (DE)
(72) Erfinder: ZELLER, Hansjoerg, 30165 Hannover (DE); SENG, Matthias, 30165 Hannover (DE)
(74) Vertreter: Continental Corporation
(86) Internationale Anmeldenummer: PCT/EP2020/062019
(87) Internationale Veröffentlichungsnummer: WO 2020/244852

(56) Entgegenhaltungen:
- EP-A1- 1 829 712
- EP-A2- 0 239 719
- EP-A2- 0 780 245
- US-A- 6 151 959

## Beschreibung

Die Erfindung betrifft einen Fahrzeugluftreifen mit einem profilierten Laufstreifen mit in der vorgesehenen Profiltiefe ausgeführten Rillen sowie mit Profilpositiven, in welche bis in eine Tiefe von zumindest 50% der Profiltiefe reichende Gummistreifen eingesetzt sind, die eine gegenüber dem sonstigen Gummimaterial der Profilpositive geringere Abriebfestigkeit und eine Breite von 1,0 mm bis 4,0 mm aufweisen.

Ein derartiger Fahrzeugluftreifen ist beispielsweise aus der EP 0 780 245 B1 bekannt. Der Laufstreifen dieses Reifens setzt sich aus einer die Profilierung enthaltenden, radial äußeren Laufstreifenschicht ("Laufstreifencap") und einer radial innere Laufstreifenschicht ("Laufstreifenbase") zusammen. Die radial äußere Laufstreifenschicht ist von einer Vielzahl von abriebfesteren und geringer abriebfesten Gummistreifen in radialer Richtung durchsetzt. Gemäß einer Variante sind die Gummistreifen axial nebeneinander ausgebildet und sind daher in Umfangsrichtung ausgerichtet. Beim Betrieb der Reifen werden die geringer abriebfesten Gummistreifen stärker bzw. schneller abgerieben als die Laufstreifenbereiche aus dem abriebfesteren Gummimaterial, wodurch sich am Laufstreifen in Umfangsrichtung verlaufende Einkerbungen bilden. Diese sollen die Wasserableiteigenschaften auf Eis und die Schneegriffwirkung verbessern. Die mit den Gummistreifen aus geringer abriebfesten Gummimaterial einhergehenden vorteilhaften Effekte treten erst bei zunehmendem Abrieb des Laufstreifen auf.

Der Erfindung liegt die Aufgabe zugrunde einen Fahrzeugluftreifen der eingangs genannten Art derart zu gestalten, dass bereits bei neuem Reifen die Fahreigenschaften auf Schnee und/oder Eis merklich verbessert sind.

Gelöst wird die gestellte Aufgabe erfindungsgemäß dadurch, dass, im Neuzustand des Reifens betrachtet, auf den geringer abriebfesten Gummistreifen jeweils eine Mikrorille verläuft, die eine Tiefe von 0,3 mm bis 1,5 mm aufweist und deren Breite höchstens der Breite des geringer abriebfesten Gummistreifens entspricht.

Durch die Mikrorillen weist der Reifen bzw. sein Laufstreifen - im Gegensatz zu dem aus der EP 0 780 245 B1 bekannten Reifen - bereits im Neuzustand verbesserte Fahr- und Griffeigenschaften auf Schnee- und/oder Eis auf. In üblichen, Mikrorillen aufweisenden Laufstreifen sind Mikrorillen bereits nach Fahrten von etwa 1000 km "abgerieben", sodass deren Wirkung zeitlich deutlich begrenzt ist. Da die Mikrorillen bei der erfindungsgemäßen Ausführung auf den geringer abriebfesten Gummistreifen verlaufen, gelingt es, eine Mikrorillenstruktur bzw. eine mikrorillenähnliche Struktur auch nach dem Verschwinden der ursprünglichen Mikrorillen durch Laufstreifenabrieb aufrechtzuerhalten. Bei fortschreitendem Abrieb der radial äußeren Laufstreifenschicht wird eine derartige Struktur fortlaufend "nachgebildet", sodass gute Fahreigenschaften auf Schnee und/oder Eis über die Lebensdauer des Reifens erhalten bleiben.

Gemäß einer bevorzugten Ausführungsvariante verlaufen die Mikrorillen jeweils gemeinsam mit den zugehörigen geringer abriebfesten Gummistreifen in Umfangsrichtung, insbesondere über den Reifenumfang. Derart angeordnete Gummistreifen sind bezüglich Eis- und Schneegriff besonders effektiv und lassen sich bei der Reifenfertigung auf einfache Weise in den Laufstreifen einbringen. Bei alternativen, ebenfalls vorteilhaften Ausführungen verlaufen die geringer abriebfesten Gummistreifen und die Mikrorillen unter einem Winkel zur Umfangsrichtung über die Breite des Laufstreifens, ggf. auch in axialer Richtung.

Bevorzugt beträgt die Tiefe der Mikrorillen 0,3 mm bis 1,5 mm, insbesondere bis zu 1,0 mm. Eine derart geringe Tiefe ist für das Erreichen der oben erwähnten Effekte ausreichend.

Bei einer weiteren bevorzugten Ausführung entspricht die Breite der Mikrorillen der Breite der geringer abriebfesten Gummistreifen. Dadurch wird die ursprüngliche Mikrorillenstruktur mit zunehmendem Laufstreifenabrieb nahezu gleichbleibend fortlaufend nachgebildet.

Ferner ist es von Vorteil, wenn die geringer abriebfesten Gummistreifen bis auf Profiltiefe reichen. Dadurch lassen sich die erwähnten Effekt über die gesamte Lebensdauer des Reifens erhalten.

Eine weitere vorteilhafte Variante der Erfindung ist dadurch gekennzeichnet, dass das Gummimaterial der geringer abriebfesten Gummistreifen eine Shore-A Härte nach ISO 868 aufweist, welche um 5 ShA bis 20 ShA, vorzugsweise um 10 ShA bis 15 ShA, geringer ist als die Shore-A Härte des sonstigen Gummimateriales der Profilpositive. Eine solche Differenz in den Shore-A Härten begünstigt die erwähnte Nachbildung der Mikrorillen.

In diesem Zusammenhang ist es ferner vorteilhaft, wenn das sonstige Gummimaterial der Profilpositive eine Shore-A Härte von 55 ShA bis 65 ShA aufweist.

Gemäß einer weiteren vorteilhaften Ausführungsvariante weist der Laufstreifen Profilpositive auf, welche sich zumindest in der radial äußeren, bis in eine Tiefe von zumindest 50% der Profiltiefe reichenden Schicht in axialer Richtung abwechselnd aus den abriebfeste Gummisteifen und geringer abriebfesten Gummistreifen zusammensetzen, wobei die Gummistreifen vorzugsweise in Umfangsrichtung verlaufen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 einen schematischen Querschnitt durch einen extrudierten, nicht vulkanisierten Laufstreifen für einen Fahrzeugluftreifen,
Fig. 2 einen Querschnitt durch einen den Laufstreifen aus Fig. 1 aufweisenden Fahrzeugluftreifen im Bereich des Laufstreifens und des Gürtelverbandes und
Fig. 3 eine vergrößerte Darstellung des Details Z der Fig. 2.

Gemäß der Erfindung ausgeführte Fahrzeugluftreifen sind insbesondere Reifen in Radialbauart für Personenkraftwagen, Vans oder Light-Trucks, wobei die Reifen zum Fahren unter winterlichen Fahrbedingungen vorgesehen sind.

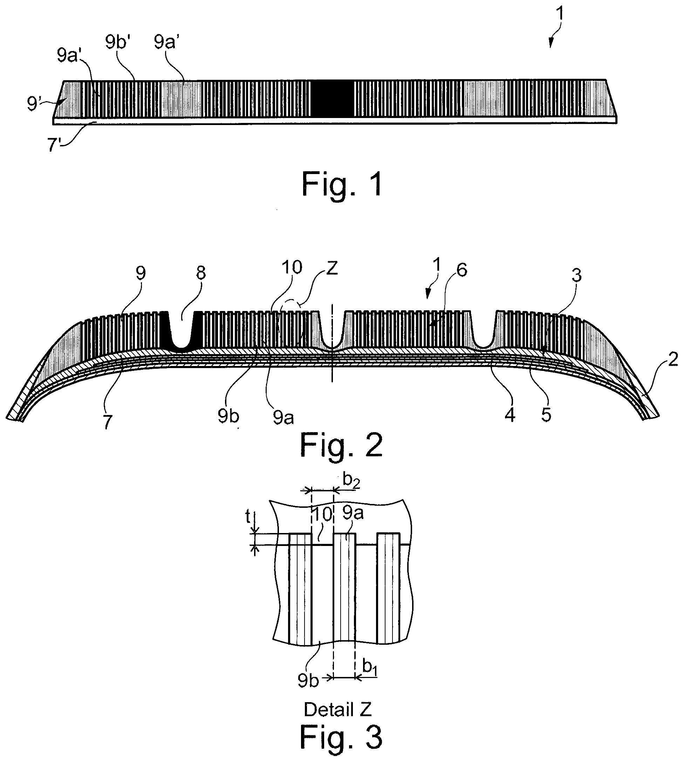

Fig. 1 zeigt einen Querschnitt im Bereich eines lediglich schematisch dargestellten, extrudierten, nicht vulkanisierten Laufstreifens 1 für einen Fahrzeugluftreifen. Fig. 2 zeigt den zugehörigen Fahrzeugluftreifen mit dem Laufstreifen 1 im vulkanisierten Zustand. Gemäß Fig. 2 weist der Fahrzeugluftreifen die üblichen Bauteile auf, zu welchen insbesondere Seitenwände 2, ein Gürtelverband 3, eine Karkasseinlage 4, eine Innenschicht 5 sowie nicht gezeigte Wulstbereiche mit Wulstkernen und Kernreitern gehören. Diese Bauteile können in an sich bekannter Weise ausgeführt sein.

Gemäß Fig. 2 ist der Laufstreifen 1 beim gezeigten Ausführungsbeispiel in radialer Richtung zweischichtig aufgebaut und weist eine die Profilierung enthaltende radial äußere Laufstreifenschicht 6, welche auch als "Laufstreifencap" bezeichnet wird, und eine radial innere Laufstreifenschicht 7, welche auch als "Laufstreifenbase" bezeichnet wird, auf. Von der Profilierung des Laufstreifens 1 sind beispielshaft drei Umfangsrillen 8 dargestellt, welche die jeweils vorgesehene maximale Profiltiefe von üblicherweise 6,5 mm bis 10,0 mm aufweisen und Profilrippen 9 voneinander trennen. Die Profilrippen 9 sind insbesondere in an sich bekannter Weise mit nicht gezeigten Einschnitten und/oder Rillen versehen und können ferner auch durch Querrillen blockartig strukturiert sein.

Die Profilrippen 9 sind von einer Vielzahl bis zur radial inneren Laufstreifenschicht 7 reichenden, in Umfangsrichtung umlaufenden, sich in radialer Richtung erstreckenden Gummistreifen 9b durchsetzt, die mit Gummistreifen 9a abwechseln. Das Gummimaterial der Gummistreifen 9b weist eine höhere Abriebfestigkeit nach ISO 4649 auf als das Gummimaterial der Gummistreifen 9b. Die Gummistreifen 9a werden daher nachfolgend als "abriebfeste Gummistreifen 9a" und die Gummistreifen 9b als "geringer abriebfeste Gummistreifen 9b" bezeichnet. Das Gummimaterial der abriebfesten Gummistreifen 9a weist eine Shore-A Härte nach ISO 868 von vorzugsweise 55 ShA bis 75 ShA, insbesondere von 60 ShA bis 70ShA, das Gummimaterial der geringer abriebfesten Gummistreifen 9b weist eine insbesondere um 5 ShA bis 20 ShA, vorzugsweise um 10 ShA bis 15 ShA, geringere Shore-A Härte als das Gummimaterial der abriebfesten Gummistreifen 9a auf.

Wie Fig. 2 und Fig. 3 zeigen, befinden sich die geringer abriebfesten Gummistreifen 9b jeweils zwischen zwei abriebfesten Gummistreifen 9a. Die geringer abriebfesten Gummistreifen 9b und die zwischen diesen befindlichen abriebfesten Gummistreifen 9a weisen, im Querschnitt betrachtet, in axialer Richtung jeweils eine konstante Breite b₁ (Gummistreifen 9a, Fig. 3) bzw. b₂ (Gummistreifen 9b, Fig. 3)auf. Die Breite b₂ der geringer abriebfesten Gummistreifen 9b beträgt 1,0 mm bis 4,0 mm, insbesondere 1,5 mm bis 3,0 mm. Die Breite b₁ der abriebfesten Gummistreifen 9a stimmt beim gezeigten Ausführungsbeispiel mit der Breite b₂ der geringer abriebfesten Gummistreifen 9b überein, kann von dieser jedoch auch abweichend ausgeführt sein.

Wie insbesondere Fig. 3 zeigt, sind im Neuzustand des Reifens die geringer abriebfesten Gummistreifen 9b in radialer Richtung gegenüber den abriebfesten Gummistreifen 9a vertieft, sodass auf den geringer abriebfesten Gummistreifen 9b jeweils eine Mikrorille 10 verläuft, die bei der Vulkanisation des Reifens durch die Vulkanisationsform eingeprägt worden ist. Die Mikrorillen 10 sind daher derart ausgebildet, dass jeweils eine einzige Mikrorille 10 zwischen zwei abriebfesten Gummistreifen 9a in Umfangsrichtung verläuft. Die Mikrorillen 10 sind in Umfangsrichtung dabei durch etwaige in den Profilrippen 9 ausgebildete Einschnitte und/oder Rillen unterbrochen, sie weisen in radialer Richtung eine Tiefe t von 0,3 mm bis 1,5 mm, insbesondere von bis zu 1,0 mm, auf, ihre Breite entspricht idealerweise der Breite b₂ der geringer abriebfesten Gummistreifens 9b. Die Mikrorillen 10 können auch innerhalb der geringer abriebfesten Gummistreifen 9b derart ausgebildet sein, dass ihre Breite um bis zu 20% geringer ist als die Breite b₂ dieser Gummistreifen 9b, sodass seitlich der Mikrorillen 10 Gummimaterial dieser Gummistreifen 9b bis zur Laufstreifenperipherie reicht.

Wie in Fig. 1 angedeutet ist, wird der Laufstreifen 1 bei seiner Herstellung in einer auf die vorgesehene Profilierung abgestimmten Weise mit einer Kautschukmischungsschicht 7`, welche bei der Vulkanisation die radial innere Laufstreifenschicht 7 bildet, und einer Kautschukmischungsschicht 9`, die abwechselnd aus Kautschukmischungsstreifen 9a` und Kautschukmischungsstreifen 9b` besteht, extrudiert. Dabei erfolgt die Extrusion derart, dass sich die Kautschukmischungsstreifen 9b` nach der Vulkanisation innerhalb der Profilrippen 9 befinden. Im Bereich der Umfangsrillen 4 und schulterseitig befinden sich Kautschukmischungsstreifen 9a`, die breiter sind als jene zwischen den Kautschukmischungsstreifen 9b`.

Insbesondere kann der Laufstreifen ein Monolaufstreifen sein und/oder in jenem Laufstreifenteil, welcher die Profilierung enthält, eine äußere Laufstreifenschicht aufweisen, die sich aus den Gummistreifen 9a, 9b zusammensetzt und in radialer Richtung eine Dicke von mindestens 50% der Profiltiefe besitzt.

### Bezugsziffernliste

- 1: Laufstreifen
- 2: Seitenwand
- 3: Gürtelverband
- 4: Karkasseinlage
- 5: Innenschicht
- 6: radial äußere Laufstreifenschicht
- 7: radial innere Laufstreifenschicht
- 7': Kautschukmischungsschicht
- 8: Umfangsrille
- 9: Profilrippe
- 9a, 9b: Gummistreifen
- 9': Kautschukmischungsschicht
- 9a', 9b': Kautschukmischungsstreifen
- 10: Mikrorille
- b₁, b₂: Breite
- t: Tiefe

## Patentansprüche

1. Fahrzeugluftreifen mit einem profilierten Laufstreifen (1) mit in der vorgesehenen Profiltiefe ausgeführten Rillen (8) sowie mit Profilpositiven (9), in welche bis in eine Tiefe von zumindest 50% der Profiltiefe reichende Gummistreifen (9b) eingesetzt sind, die eine gegenüber dem sonstigen Gummimaterial (9a) der Profilpositive (9) geringere Abriebfestigkeit, gemessen nach ISO 4649, und eine Breite (b₂) von 1,0 mm bis 4,0 mm aufweisen,
**dadurch gekennzeichnet,**
**dass**, im Neuzustand des Reifens betrachtet, auf den geringer abriebfesten Gummistreifen (9b) jeweils eine Mikrorille (10) verläuft, die eine Tiefe (t) von 0,3 mm bis 1,5 mm aufweist und deren Breite höchstens der Breite des geringer abriebfesten Gummistreifens (9b) entspricht.

2. Fahrzeugluftreifen nach Anspruch 1, **dadurch gekennzeichnet, dass** die Mikrorillen (10) jeweils gemeinsam mit dem zugehörigen geringer abriebfesten Gummistreifen (9b) in Umfangsrichtung, insbesondere über den Reifenumfang, verlaufen.

3. Fahrzeugluftreifen nach Anspruch 1 oder 2, **dadurch gekennzeichnet, dass** die Tiefe (t) der Mikrorillen (10) 0,3 mm bis 1,5 mm, insbesondere bis zu 1,0 mm, beträgt.

4. Fahrzeugluftreifen nach einem der Ansprüche 1 bis 3, **dadurch gekennzeichnet, dass** die Breite (b₁) der Mikrorillen (10) der Breite der geringer abriebfesten Gummistreifen (9b) entspricht.

5. Fahrzeugluftreifen nach einem der Ansprüche 1 bis 4, **dadurch gekennzeichnet, dass** die geringer abriebfesten Gummistreifen (9b) bis auf Profiltiefe reichen.

6. Fahrzeugluftreifen nach einem der Ansprüche 1 bis 5, **dadurch gekennzeichnet, dass** das Gummimaterial der geringer abriebfesten Gummistreifen (9b) eine Shore-A Härte nach ISO 868 aufweist, welche um 5 ShA bis 20 ShA, vorzugsweise um 10 ShA bis 15 ShA, geringer ist als die Shore-A Härte des sonstigen Gummimateriales der Profilpositive (9).

7. Fahrzeugluftreifen nach einem der Ansprüche 1 bis 6, **dadurch gekennzeichnet, dass** das sonstige Gummimaterial (9a) der Profilpositive (9) eine Shore-A Härte von 55 ShA bis 65 ShA aufweist.

8. Fahrzeugluftreifen nach einem der Ansprüche 1 bis 7, **dadurch gekennzeichnet, dass** der Laufstreifen Profilpositive aufweist, welche sich zumindest in der radial äußeren, bis in eine Tiefe von zumindest 50% der Profiltiefe reichenden Schicht in axialer Richtung abwechselnd aus den abriebfeste Gummistreifen (9a) und den geringer abriebfesten Gummistreifen (9b) zusammensetzen, wobei die Gummistreifen (9a, 9b) vorzugsweise in Umfangsrichtung verlaufen.

## Claims

1. Pneumatic vehicle tyre having a profiled tread (1) with grooves (8) formed at the intended tread depth and with profile positives (9) in which there are inserted rubber strips (9b) which extend to a depth of at least 50% of the tread depth and have a lower abrasion resistance, measured in accordance with ISO 4649, than the rest of the rubber material (9a) of the profile positives (9) and a width (b₂) of 1.0 to 4.0 mm, **characterized in that**, considered in the new state of the tyre, running on each of the less abrasion-resistant rubber strips (9b) is a microgroove (10) which has a depth (t) of 0.3 to 1.5 mm and the width of which corresponds at most to the width of the less abrasion-resistant rubber strip (9b).

2. Pneumatic vehicle tyre according to Claim 1, **characterized in that** the microgrooves (10) each run together with the associated less abrasion-resistant rubber strip (9b) in the circumferential direction, in particular over the circumference of the tyre.

3. Pneumatic vehicle tyre according to Claim 1 or 2, **characterized in that** the depth (t) of the microgrooves (10) is 0.3 mm to 1.5 mm, in particular up to 1.0 mm.

4. Pneumatic vehicle tyre according to one of Claims 1 to 3, **characterized in that** the width (b₁) of the microgrooves (10) corresponds to the width of the less abrasion-resistant rubber strips (9b).

5. Pneumatic vehicle tyre according to one of Claims 1 to 4, **characterized in that** the less abrasion-resistant rubber strips (9b) reach as far as the tread depth.

6. Pneumatic vehicle tyre according to one of Claims 1 to 5, **characterized in that** the rubber material of the less abrasion-resistant rubber strips (9b) has a Shore A hardness in accordance with ISO 868 that is lower by 5 ShA to 20 ShA, preferably by 10 ShA to 15 ShA, than the Shore A hardness of the rest of the rubber material of the profile positives (9).

7. Pneumatic vehicle tyre according to one of Claims 1 to 6, **characterized in that** the rest of the rubber material (9a) of the profile positives (9) has a Shore A hardness of 55 ShA to 65 ShA.

8. Pneumatic vehicle tyre according to one of Claims 1 to 7, **characterized in that** the tread has profile positives which, at least in the radially outer layer reaching to a depth of at least 50% of the tread depth, are made up alternately in the axial direction of the abrasion-resistant rubber strip (9a) and the less abrasion-resistant rubber strip (9b), the rubber strips (9a, 9b) preferably running in the circumferential direction.

## Revendications

1. Pneumatique de véhicule comprenant une bande de roulement sculptée (1) munie de rainures (8), ménagées dans la profondeur de sculpture, et de sculptures positives (9) dans lesquelles sont insérées des bandes de caoutchouc (9b) qui atteignent une profondeur d'au moins 50 % de la profondeur de sculpture, qui présentent une résistance à l'abrasion, mesurée selon ISO 4649, inférieure à celle de l'autre matière caoutchouteuse (9a) des sculptures positives (9) et qui ont une largeur (b₂) allant de 1,0 mm à 4,0 mm,
**caractérisé en ce que**
lorsque le pneumatique est neuf, une micro-rainure (10) s'étend sur chacune des bandes de caoutchouc moins résistantes à l'abrasion (9b) et a une profondeur (t) allant de 0,3 mm à 1,5 mm et la largeur correspondant au plus à la largeur de la bande de caoutchouc moins résistante à l'abrasion (9b).

2. Pneumatique de véhicule selon la revendication 1, **caractérisé en ce que** les micro-rainures (10) s'étendent chacune conjointement avec la bande de caoutchouc moins résistante à l'abrasion (9b) associée dans la direction circonférentielle, notamment sur la circonférence du pneumatique.

3. Pneumatique de véhicule selon la revendication 1 ou 2, **caractérisé en ce que** la profondeur (t) des micro-rainures (10) va de 0,3 mm à 1,5 mm, notamment jusqu'à 1,0 mm.

4. Pneumatique de véhicule selon l'une des revendications 1 à 3, **caractérisé en ce que** la largeur (b₁) des micro-rainures (10) correspond à la largeur des bandes de caoutchouc moins résistantes à l'abrasion (9b).

5. Pneumatique de véhicule selon l'une des revendications 1 à 4, **caractérisé en ce que** les bandes de caoutchouc moins résistantes à l'abrasion (9b) s'étendent jusqu'à la profondeur de sculpture.

6. Pneumatique de véhicule selon l'une des revendications 1 à 5, **caractérisé en ce que** la matière caoutchouteuse des bandes de caoutchouc moins résistantes à l'abrasion (9b) présente une dureté Shore A selon la norme ISO 868 qui est inférieure à la dureté Shore A de l'autre matière caoutchouteuse de la sculpture positive (9) de l'ordre de 5 ShA à 20 ShA, de préférence de 10 ShA à 15 ShA.

7. Pneumatique de véhicule selon l'une des revendications 1 à 6, **caractérisé en ce que** le reste de la matière caoutchouteuse (9a) de la sculpture positive (9) a une dureté Shore A allant de 55 ShA à 65 ShA.

8. Pneumatique de véhicule selon l'une des revendications 1 à 7, **caractérisé en ce que** la bande de roulement comporte des sculptures positives qui, au moins dans la couche radialement extérieure s'étendant sur une profondeur d'au moins 50 % de la profondeur de sculpture, alternent dans la direction axiale entre les bandes de caoutchouc résistantes à l'abrasion (9a) et la bande de caoutchouc moins résistante à l'abrasion (9b), les bandes de caoutchouc (9a, 9b) s'étendant de préférence dans la direction circonférentielle.
